# EUROPÄISCHE PATENTANMELDUNG

(11) **EP 1 741 645 A1**
(43) Veröffentlichungstag der Anmeldung: **10.01.2007**
(21) Anmeldenummer: 05405422.6
(22) Anmeldetag: 04.07.2005
(51) Int. Cl.: B65G 47/14, B21F 23/00, B21C 1/32

(54) **Vorrichtung zum Aufteilen eines Bundes aus langen, dünnen Objekten**

(71) Anmelder: H.A. SCHLATTER AG, 8952 Schlieren (CH)
(72) Erfinder: Siegrist, Roger, 8953 Dietikon (CH); Kessler, Thomas, 5417 Untersiggenthal (CH)
(74) Vertreter: Roshardt, Werner Alfred

(57) **Zusammenfassung**

Eine Vorrichtung zum Aufteilen eines Bundes (60) aus langen, dünnen Objekten, insbesondere Drähten, z. B. Querdrähten oder auch Längsdrähten für eine Gitterschweissmaschine, umfasst einen Aufnahmeraum (30) zur Aufnahme des Bundes (60) sowie einen Zuführbereich (22), welcher in eine im Wesentlichen quer zu einer Längsrichtung der Objekte orientierte Zuführrichtung geneigt ist. Der Zuführbereich (22) grenzt in Zuführungsrichtung an den Aufnahmeraum (30) an, und die Vorrichtung umfasst Mittel (40) zum Bewegen des im Aufnahmeraum (30) aufgenommenen Bundes (60) und des Zuführbereichs (22) relativ zueinander, derart dass ein oberer Teil des Bundes (60) auf einem Niveau oberhalb der oberen Begrenzung (23) des Zuführbereichs (22) zu liegen kommt und Objekte aus diesem oberen Teil des Bundes (60) im Wesentlichen durch die Schwerkraft in Zuführrichtung auf den Zuführbereich (22) gefördert werden, während ein unterer Teil des Bundes (60) durch eine Begrenzung des Aufnahmeraums (30) im Aufnahmeraum (30) zurückgehalten wird. Die Vorrichtung ist einfach aufgebaut und funktioniert zuverlässig, weil der gesamte Bund (60) bewegt wird und nicht ein Teil des Bundes (60) durch einen Eingriff in den Bund (60) mechanisch vom Rest getrennt werden muss. Der Aufteilungsvorgang ist durch Steuerung oder Regelung der Relativbewegung des Bundes (60) und des Zuführbereichs (22) fein dosierbar.

## Beschreibung

### Technisches Gebiet

Die Erfindung betrifft eine Vorrichtung zum Aufteilen eines Bundes aus langen, dünnen Objekten, insbesondere Drähten, umfassend einen Aufnahmeraum zur Aufnahme des Bundes sowie einen Zuführbereich, welcher in eine im Wesentlichen quer zu einer Längsrichtung der Objekte orientierte Zuführrichtung geneigt ist. Die Erfindung betrifft weiter ein Verfahren zum Aufteilen von langen, dünnen Objekten.

### Stand der Technik

Bei Gitterschweissmaschinen, die mit Drähten mit vorkonfektionierter Länge arbeiten, ist es erforderlich, die Drähte, welche als Bündel angeliefert werden, zu vereinzeln. Die Geschwindigkeit und Zuverlässigkeit der Vereinzelung kann ganz wesentlich zur Produktionsleistung der Schweissmaschine beitragen.

Vorrichtungen und Verfahren zum Vereinzeln von Drähten gehören an sich zum Stand der Technik. Entsprechende Vorrichtungen weisen oft einen Einfachspalt auf, welchem ein Zuführbereich vorgeordnet ist, in welchen Drähte bundweise angefördert werden. Die Vereinzelung der Drähte wird oft unterstützt durch von oben und/oder unten auf die Drähte einwirkende Elemente wie z. B. Abstreifer, profilierte Rollen bzw. Walzen, vgl. CH 691 669 (H. A. Schlatter AG), DE 738 828 C1 (K. Lange), DE 11 11 907 B1 (Gebr. Böhler & Co.).

Dabei besteht oft das Problem, dass der im Zuführbereich, d. h. vor dem Eingang des Spalts, platzierte Drahtbund Druck auf die eigentliche Vereinzelungseinrichtung ausübt und dadurch die wunschgemässe Vereinzelung erschwert oder zu Blockaden am Einrichtungseingang führt. Um diese negativen Effekte zu reduzieren bzw. zu verhindern, ist es vorteilhaft, Drahtbünde/Stabbünde zuzuführen, welche eine gewisse Grösse nicht überschreiten, damit der Staudruck gering gehalten werden kann. Es sind Vorrichtungen bekannt, um einen grossen angeförderten Drahtbund in kleinere Teilbünde aufzuteilen und diese in den Zuführbereich zu befördern.

Bei der CH 442 150 A (Gebr. Eickhoff) rutschen Drähte aus einem Vorratsbehälter mit einer zu einer Ablauföffnung geneigten, schwenkbaren Bodenfläche auf eine Zuführebene zu einem Einfachspalt. Vor diesem ist eine parallel zur Achse der stabförmigen Teile liegende, profilierte Rolle angeordnet, um die Drähte aufzulockern. Bei dieser Vorrichtung kann die Zahl der zur Vereinzelungsvorrichtung gelangenden Drähte durch Schwenken der Bodenfläche reguliert werden. Allerdings lässt sich dadurch die Drahtmenge nur beschränkt kontrollieren; es ist insbesondere schwierig, während des Betriebs die Bodenfläche entgegen der Drahtbewegung zurück nach oben zu bewegen, wenn die zugeführte Drahtmenge reduziert werden soll. Ausserdem führen die Drähte beim Übergang aus dem Vorratsbehälter auf die Zuführebene zum Teil eine freie Fallbewegung aus, wodurch sich deren Orientierung unkontrolliert ändern kann. Dies kann zu einer gegenseitigen Blockade der auf der Zuführebene befindlichen Drähte führen.

Die WO 01/38020 (EVG) offenbart eine Vorrichtung zum Herauslösen und Überführen von abgelängten Drähten aus einem losen, ungeordneten Drahtbündel in eine Einfachlage von parallelen Drähten. Dazu wird in einem ersten Schritt ein kleineres Teilbündel aus dem in einem Vorratsmagazin bereitgestellten Drahtbündel entnommen und anschliessend in den Wirkungsbereich mehrerer Auskämmeinrichtungen gebracht. Die Entnahme des Teilbündels erfolgt mittels eines Vorportionierers, der aus mehreren auf einer Welle gelagerten Förderrädern besteht. Diese weisen mehrere am Umfang verteilte Fächer auf, die zur Aufnahme je eines Teilbündels dienen. Die Teilbündel werden durch Drehen der Förderräder nacheinander auf eine leicht geneigte Zwischenauflage gefördert, von welcher sie infolge der Schwerkraft in Drahtschächte rutschen. Um eine Blockade der auf der Zwischenablage befindlichen Drähte zu verhindern, werden diese mittels der Auskämmräder bearbeitet.

Die AT 368 414 (EVG) zeigt eine Vorrichtung zum Überführen von abgelängten Drähten aus einem losen Drahtbündel in eine Einfachlage von parallelen Drähten. Die Vorrichtung umfasst eine Entnahmevorrichtung, welche in der Form einer um eine horizontale Achse drehbaren Schaufel ausgebildet ist. Diese greift mit ihrer Spitze in das Drahtbündel ein und erfasst somit einen Teil des Drahtbündels. Dieses wird in der Schaufel soweit hochgehoben, bis die Drähte des Teilbündels infolge der Schwerkraft über den Schaufelboden und schwenkbare Schienen auf eine Zuführebene rutschen. Dort werden sie zunächst hinter einem Abstreifdaumen gestaut und anschliessend durch eine Hin- und Herbewegung des Daumens dosiert einem Drahtführungskanal zugeführt.

Diese bekannten Vorrichtungen weisen einen recht komplizierten Aufbau auf und sind entsprechend kostspielig und fehleranfällig. Ausserdem greifen die Förderräder bzw. die Schaufel in das bereitgestellte Drahtbündel ein, wobei es vorkommen kann, dass ein Ende eines Drahts vom entsprechenden Element erfasst wird, das andere aber nicht. In diesen Fällen ist die Gefahr gross, dass Drähte dabei verbiegen und in Folge die Vorrichtung blockiert. Ausserdem wird durch die Förderräder bzw. die Schaufel jeweils ein Teilbund vorgegebener Grösse aus dem im Aufnahmeraum befindlichen Bund entnommen, die Anzahl der in den Zuführbereich geförderten Objekte ist somit nicht fein dosierbar.

### Darstellung der Erfindung

Aufgabe der Erfindung ist es, eine dem eingangs genannten technischen Gebiet zugehörende Vorrichtung zu schaffen, welche einfach aufgebaut ist, zuverlässig funktioniert und eine feine Dosierbarkeit des Aufteilungsvorgangs ermöglicht.

Die Lösung der Aufgabe ist durch die Merkmale des Anspruchs 1 definiert. Gemäss der Erfindung grenzt der Zuführbereich in Zuführungsrichtung an den Aufnahmeraum an. Die Vorrichtung umfasst ausserdem Mittel zum Bewegen des im Aufnahmeraum aufgenommenen Bundes und des Zuführbereichs relativ zueinander, derart dass ein oberer Teil des Bundes auf einem Niveau oberhalb der oberen Begrenzung des Zuführbereichs zu liegen kommt und Objekte aus diesem oberen Teil des Bundes im Wesentlichen durch die Schwerkraft in Zuführrichtung auf den Zuführbereich gefördert werden, während ein unterer Teil des Bundes durch eine Begrenzung des Aufnahmeraums im Aufnahmeraum zurückgehalten wird.

Eine derartige Vorrichtung lässt sich einfach aufbauen, insbesondere weil der Zuführbereich an den Aufnahmeraum angrenzt und somit die Objekte keinen grossen Weg vom Aufnahmeraum zum Zuführbereich zurücklegen müssen. Weil der gesamte Bund bewegt wird und nicht ein Teil des Bundes durch einen Eingriff in den Bund mechanisch vom Rest getrennt werden muss, besteht keine Gefahr, dass Objekte nur teilweise erfasst werden. Ausserdem lassen sich Bünde mit Querdrähten verschiedener Länge aufteilen, ohne dass aufwändige Umbauarbeiten notwendig wären. Weil keine Teilbünde vorgegebener Grösse entnommen werden, ist der Aufteilungsvorgang fein dosierbar.

Die Objekte im oberen Teil des Bundes, welche nicht durch die Begrenzung des Aufnahmeraums in diesem zurückgehalten werden, können je nach Position und geometrischer Anordnung der Objekte durch die Schwerkraft in Zuführrichtung auf den Zuführbereich gefördert werden, oder sie bewegen sich - in einem hinteren Bereich des oberen Teils - der Zuführrichtung entgegen und rollen zurück in den unteren Teil des Aufnahmeraums. Durch diese zwanglose Bewegung ergibt sich gleichzeitig eine verbesserte Ausrichtung der Objekte im Aufnahmeraum.

Der Zuführbereich kann als ebene oder auch gebogene Fläche ausgebildet sein, auf welcher die angeförderten Objekte aufgrund der Schwerkraft weiter zur eigentlichen Vereinzelungseinrichtung gleiten bzw. rollen. Die Fläche kann durchgehend ausgebildet oder durch mehrere beabstandete Elemente aufgespannt sein.

Bei den im Bund enthaltenen langen, dünnen Objekten kann es sich um Drähte, aber auch beispielsweise um Stäbe handeln, allgemein also um im Wesentlichen gerade Elemente mit im Wesentlichen konstantem Querschnitt. Die erfindungsgemässe Vorrichtung und das erfindungsgemässe Verfahren sind insbesondere zur Vordosierung von Querdrähten oder Längsdrähten vor einer Gitterschweissmaschine geeignet, besonders für Querdrähte mit einer Länge von typischerweise 3,5 m oder weniger. Der Einsatzbereich der Erfindung ist aber nicht darauf beschränkt, er erstreckt sich auch auf andere Anwendungen, bei welchen Bünde aus langen, dünnen Objekten aufgeteilt werden müssen.

Mit Vorteil bildet eine obere Begrenzung des Zuführbereichs einen oberen Rand des Aufnahmeraums. Der Aufnahmeraum ist somit zumindest im Wesentlichen unterhalb des oberen Endes des Zuführbereichs angeordnet. Er kann beispielsweise als Fach oder als Vertiefung ausgebildet sein. Der obere Rand des Aufnahmeraums, welcher gleichzeitig auch den Zuführbereich an seinem oberen Ende begrenzt, bildet somit eine Schwelle, welche von den Objekten überwunden werden muss, damit diese in den Zuführbereich gelangen können. Weil sie direkt aus dem oberen Teil des Bundes auf die Zuführebene rollen oder gleiten und somit keine freie Fallbewegung ausführen müssen, bleibt ihre durch den Aufnahmeraum vorgegebene Orientierung gewahrt, wodurch sich eine verbesserte Ausrichtung der Objekte im Zuführbereich ergibt.

Alternativ ist der obere Rand des Aufnahmeraums höher als die obere Begrenzung des Zuführbereichs angeordnet.

Der Objektfluss aus dem Bund auf den Zuführbereich kann durch die jeweilige vertikale Ausdehnung des oberen Teils des Bundes kontrolliert werden. Dazu wird die Relativbewegung des Bundes und des Zuführbereichs entsprechend gesteuert. Die Bewegung kann kontinuierlich erfolgen (mit wechselnder oder gleich bleibender Geschwindigkeit) oder aber schrittweise, wobei der gewünschte Objektfluss durch die Schrittlänge und Schrittkadenz kontrolliert werden kann.

Das Anheben des Bundes kann insbesondere durch Verkleinern eines Volumens des Aufnahmeraums erfolgen. Dadurch wird ein grösserer Teil des Bundes aus dem eigentlichen Aufnahmeraum auf ein Niveau oberhalb der Begrenzung des Aufnahmeraums verdrängt. Ein Erfassen des Bundes durch zusätzliche, vom Aufnahmeraum unabhängige Greifmittel erübrigt sich.

Bevorzugt ist der Zuführbereich ortsfest angeordnet, während der Bund bezüglich des Zuführbereichs durch die genannten Mittel zum Bewegen in vertikaler Richtung bewegbar, d. h. insbesondere anhebbar, ist. Dadurch wird die Ankopplung nachfolgender Bearbeitungselemente (z. B. der eigentlichen Vereinzelungsvorrichtung) an den Zuführbereich vereinfacht.

Alternativ ist der Zuführbereich zusammen mit seiner oberen Begrenzung bewegbar, d. h. insbesondere absenkbar. Wenn die obere Begrenzung des Zuführbereichs identisch ist mit dem oberen Rand des Aufnahmeraums, so kommt durch die Abwärtsbewegung ein grösserer Teil des im Aufnahmeraum befindlichen Bundes oberhalb dieser Begrenzung zu liegen, so dass Objekte aus diesem Teil auf die Zuführebene gelangen können.

Mit Vorteil sind die Mittel zum Bewegen des Bundes bzw. des Zuführbereichs durch einen bewegbaren Abschnitt der Begrenzung des Aufnahmeraums gebildet. Dies ermöglicht eine möglichst einfache Konstruktion der Vorrichtung mit einer Mindestzahl an Elementen.

Der bewegbare Abschnitt kann insbesondere die in Zuführrichtung hintere Wand des Aufnahmeraums sein. Zu diesem Zweck ist sie um eine an ihrem oberen Rand angeordnete horizontale Achse schwenkbar. Die an den Zuführbereich angrenzende, in Zuführrichtung vordere Wand des Aufnahmeraums weist einen entsprechend kreisabschnittartigen Querschnitt auf, so dass die Unterkante der hinteren, schwenkbaren Wand während der Schwenkbewegung der vorderen Wand folgt und somit der Aufnahmeraum ständig passend abgeschlossen ist. Die Objekte liegen also in einem etwa halbrunden Fach, welches hinten an den Zuführbereich angrenzt und unterhalb der oberen Begrenzung des Zuführbereichs angeordnet ist. Es hat sich gezeigt, dass die Schwenkbewegung der hinteren Wand im Zusammenspiel mit dem oberen Rand des Aufnahmeraums eine verbesserte Ausrichtung der Objekte im Aufnahmeraum bewirkt und eine gut kontrollierbare Förderung der Objekte aus dem Bund auf die Zuführebene ermöglicht.

Alternativ sind andere Abschnitte der Begrenzung bewegbar, z. B. der Boden des Aufnahmeraums, oder es sind zusätzliche, von der Begrenzung des Aufnahmeraums unabhängige Mittel zum Bewegen vorgesehen.

Mit Vorteil umfassen die Mittel zum Bewegen des im Aufnahmeraum aufgenommenen Bundes und des Zuführbereichs relativ zueinander einen Stellantrieb. Derartige Antriebe sind kommerziell verfügbar, preisgünstig und zuverlässig. Die erreichbare Genauigkeit und Geschwindigkeit des Stellvorgangs reichen für die Anwendung im Rahmen der erfindungsgemässen Vorrichtung aus. Der Stellantrieb kann als Schubantrieb ausgeführt sein mit einer Spindel, deren Mutter an einem Ausziehrohr befestigt ist, oder die Bewegung des Stellantriebs wird über eine Kette, einen Riemen bzw. über Zahnräder und/oder Zahnstangen auf die Mittel zum Bewegen des Bundes bzw. des Zuführbereichs übertragen.

Alternativ werden andere Antriebsmittel verwendet, z. B. Pneumatik- oder Hydraulikzylinder.

Mit Vorteil umfasst die erfindungsgemässe Vorrichtung einen Sensor zum Detektieren einer Anzahl und/oder Position der auf dem Zuführbereich befindlichen Objekte. Die Bewegung des Bundes und des Zuführbereichs relativ zueinander kann somit abhängig von der detektierten Anzahl und/oder Anordnung der Objekte erfolgen, wodurch eine präzise Einstellung des Objektflusses ermöglicht wird.

Alternativ ist ein Sensor an einer anderen Stelle angeordnet und detektiert beispielsweise die Ausdehnung des oberen Teils des Bundes oder das Gewicht des im Aufnahmeraum enthaltenen Bundes, oder die Bewegung erfolgt ohne jegliche Sensorik in einer fest vorgegebenen Weise, beispielsweise mit einer konstanten, dem gewünschten mittleren Objektfluss entsprechenden Geschwindigkeit.

Abhängig von der detektierten Anzahl und/oder Anordnung der Objekte kann die Bewegung des im Aufnahmeraum aufgenommenen Bundes und des Zuführbereichs relativ zueinander derart erfolgen, dass der Bund relativ zum Zuführbereich auf ein höheres oder auch auf ein niedrigeres Niveau bewegt wird. Die Relativbewegung kann also alternierend in beide Richtungen erfolgen, wodurch die Ausrichtung der im Bund enthaltenen Objekte zueinander verbessert werden kann.

Eine Ausführungsform einer Vorrichtung zum Vereinzeln eines Bundes von langen, dünnen Objekten, insbesondere Drähten, umfasst eine erfindungsgemässe Vorrichtung zum Aufteilen des Bundes sowie ein dem Zuführbereich nachgeordnetes Führungsorgan mit einem Kontrollspalt, welcher eine einem Drahtdurchmesser entsprechende Spaltbreite hat und zur Aufnahme der vereinzelten Drähte in Form einer einlagigen Drahtschicht ausgebildet ist. Durch die Vorrichtung zum Aufteilen des Bundes wird der Druck der auf dem Zuführbereich befindlichen Objekte auf den nachgeordneten Teil der Vereinzelungsvorrichtung verringert, wodurch sich eine effiziente Vereinzelung bei geringer Störungsanfälligkeit ergibt. Eine solche Vereinzelungsvorrichtung ist insbesondere für das Vereinzeln von Querdrähten am Eingang einer Gitterschweissmaschine geeignet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Schrägansicht einer Vorrichtung zum Aufteilen eines Drahtbundes mit einer nachgeordneten Vereinzelungsvorrichtung;
- Fig. 2A: eine schematische Seitenansicht der Vorrichtung zum Aufteilen eines Drahtbundes mit ihrer schwenkbaren Rückwand in der Anfangsposition;
- Fig. 2B: eine schematische Darstellung der Vorrichtung mit teilweise hochgeschwenkter Rückwand;
- Fig. 3A-E: schematische Darstellungen verschiedener Stadien des Verfahrens zum Aufteilen des Drahtbundes.

Grundsätzlich sind in den Figuren gleiche Teile mit gleichen Bezugszeichen versehen.

### Wege zur Ausführung der Erfindung

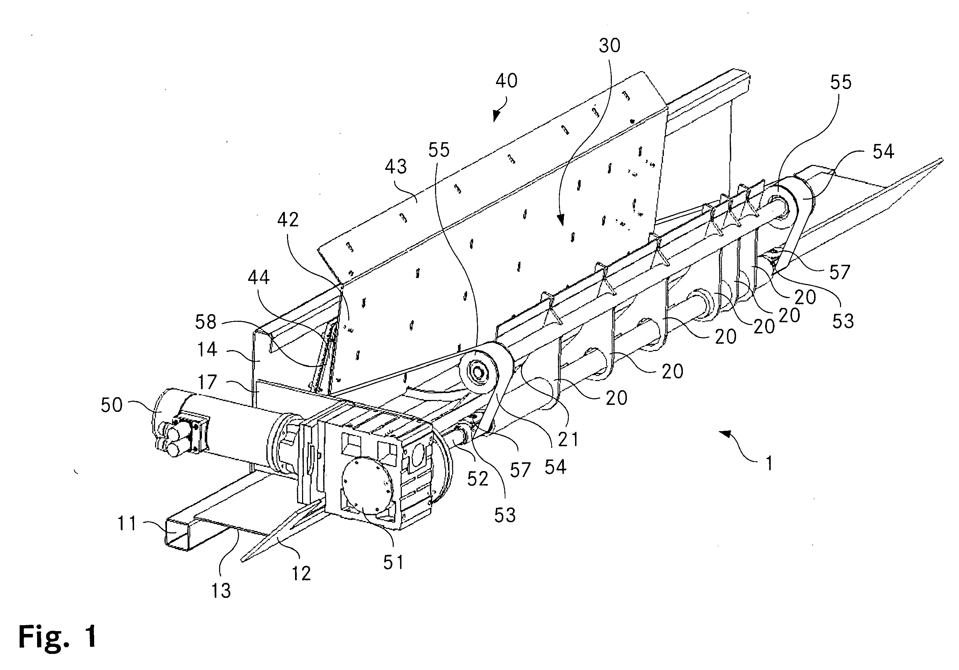

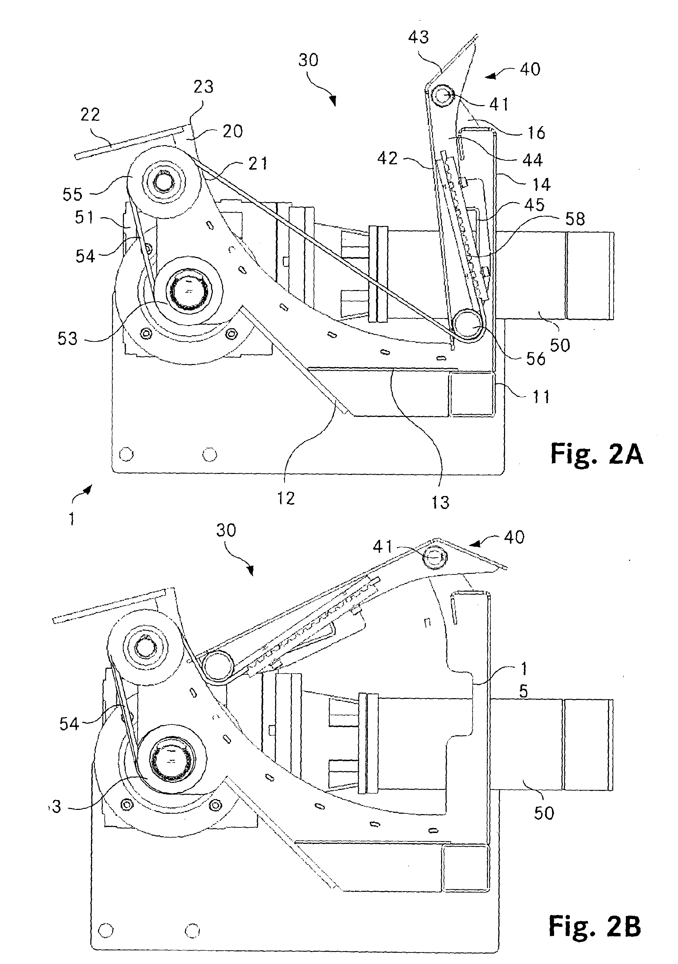

Die Figur 1 ist eine schematische Schrägansicht einer Vorrichtung zum Aufteilen eines Drahtbundes, welche insbesondere zum Verarbeiten von Querdrähten für eine Gitterschweissmaschine geeignet ist, wobei die Länge der Querdrähte 3,5 m oder weniger beträgt. Die Figur 2A zeigt eine entsprechende Seitenansicht der Vorrichtung zum Aufteilen des Drahtbundes, auf eine Ebene parallel zur Zuführungsrichtung der Drähte, senkrecht zur Drahtlängsrichtung. Die Vorrichtung 1 zum Aufteilen ist an zwei seitlichen Wandteilen eines Maschinengestells gelagert (nicht dargestellt). Zwischen den Wandteilen erstrecken sich ein als Hohlprofil ausgebildetes Querprofil 11 sowie parallel dazu ein schräg orientierter Querbalken 12. Zwischen dem Querprofil 11 und dem Querbalken 12 ist eine Stützplatte 13 eingehängt. Am Querprofil 11 ist im Bereich der Produktionsbreite der Vorrichtung 1 eine vom Querprofil 11 senkrecht nach oben gerichtete Wandplatte 14 befestigt.

Vorne anschliessend an die Wandplatte 14 erstrecken sich senkrecht dazu mehrere in Querrichtung beabstandete Bodenprofile 20. Diese sind auf dem Querprofil 11, dem Querbalken 12 und der Stützplatte 13 abgestützt und weisen eine obere, kreisabschnittförmige Kante 21 auf. Die Bodenprofile 20 bilden gemeinsam einen Aufnahmeraum 30 für einen Drahtbund, wobei die einzelnen Drähte in Querrichtung der Vorrichtung 1 orientiert sind. Der durch die oberen Kanten 21 der Bodenprofile 20 definierte Boden des Aufnahmeraums 30 weist die Form eines Kreiszylindermantelabschnitts auf. Damit auch kürzere Drähte verarbeitet werden können, sind in einem seitlichen Bereich des Aufnahmeraums 30 die gegenseitigen Abstände der Bodenprofile 20 kleiner gewählt. Kürzere Drähte werden durch entsprechende Seitenführungen (nicht dargestellt) in diesem Bereich gehalten. Bei längeren Drähten sind die Seitenführungen entsprechend weiter aussen angeordnet und gewährleisten, dass die zu verarbeitenden Drähte in Querrichtung aufeinander ausgerichtet sind.

Vorne in Zuführungsrichtung anschliessend an das obere Ende der Bodenprofile 20 ist eine in Zuführungsrichtung geneigte, ebene Ablageplatte 22 an den Bodenprofilen 20 befestigt (siehe Figur 2A; in der Figur 1 der Deutlichkeit halber nicht dargestellt). Die Neigung der Ablageplatte 22 zur Horizontalen beträgt ungefähr 15°, während der an die Ablageplatte 22 grenzende oberste Abschnitt der Kanten 21 der Bodenprofile 20 ungefähr eine Neigung von 75° aufweist. Zwischen dem Boden des Aufnahmeraums 30 und der Ablageplatte 22 wird somit eine Kante 23 gebildet mit einem Kantenwinkel von ca. 90°.

An die Ablageplatte 22 anschliessend kann eine eigentliche Vereinzelungsvorrichtung angeordnet werden, insbesondere mit einem Kontrollspalt, welcher nur eine einlagige Drahtschicht passieren lässt, und einer nachgeordneten Auskämmscheibe, welche jeweils einen der durch den Spalt nacheinander angeförderten Drähte erfasst und weiter transportiert. Die Ablageplatte 22 bildet somit den obersten Abschnitt einer Zuführebene für den Kontrollspalt. Weil der grosse, in den Aufnahmeraum 30 eingebrachte Drahtbund mittels der Vorrichtung 1 aufgeteilt wird und somit immer nur eine geringe Zahl von Drähten auf die Ablageplatte 22 gelangt, können diese ungehindert von der Ablageplatte 22 in den Kontrollspalt gelangen. Gegenseitige Blockierungen der vor dem Kontrollspalt befindlichen Drähte werden durch die geringere Anzahl Drähte und den entsprechend reduzierten Staudruck vermieden.

Die hintere Wand des Aufnahmeraums 30 wird durch eine Schwenkplatte 40 gebildet. Diese ist um eine horizontale, in Querrichtung der Vorrichtung 1 verlaufende Achse 41 schwenkbar gelagert, wobei die Achse 41 an Auslegern 16 gehalten ist, welche den optimalen Drehpunkt der Schwenkplatte definieren und sich in der dargestellten Ausführungsform von der Wandplatte 14 schräg nach vorne oben erstrecken. Die Schwenkplatte umfasst einen durch ein ebenes Metallblech gebildeten Wandabschnitt 42, welcher unterhalb der Achse 41 die vordere Seite der Schwenkplatte 40 bildet, sowie einen durch ein weiteres ebenes Metallblech gebildeten Einfüllabschnitt 43, welcher oben an den Wandabschnitt 42 angrenzt und mit diesem einen Winkel von ca. 140° einschliesst.

In der in den Figuren 1 und 2A dargestellten Anfangsposition der Schwenkplatte 40 weist der Wandabschnitt 42 praktisch senkrecht nach unten, während der Einfüllabschnitt 43 schräg nach hinten verläuft und somit das Einfüllen eines Drahtbundes in den Aufnahmeraum 30 erleichtert, indem er in der Art einer Trichterwand den einzufüllenden Drahtbund in den Aufnahmeraum 30 führt.

Der Wandabschnitt 42 weist entlang seiner unteren Kante passend zur Anordnung der Bodenprofile 20 mehrere Ausschnitte auf, durch welche die Bodenprofile 20 teilweise hindurch treten. Dazwischen erstreckt sich der Wandabschnitt 42 etwas weiter nach unten als bis zu den oberen Kanten 21 der Bodenprofile 20. Dadurch wird ein sicherer Abschluss des Aufnahmeraums 30 gewährleistet und verhindert, dass sich Drähte zwischen dem Wandabschnitt 42 und den Bodenprofilen 20 verklemmen. Die Achse 41, um welche die Schwenkplatte 40 schwenkbar ist, verläuft durch das Zentrum der durch die oberen Kanten 21 der Bodenprofile 20 gebildeten Kreisabschnitte, so dass der Wandabschnitt 42 der Schwenkplatte 40 und die Bodenprofile 20 den Aufnahmeraum 30 in jeder Schwenkposition der Schwenkplatte 40 passend begrenzen.

Die Metallbleche des Wandabschnitts 42 sowie des Einfüllabschnitts 43 sind auf der vorderen Seite mehrerer Streben 44 befestigt, welche in Querrichtung beabstandet an einem Querprofil 45 befestigt sind. An den Streben 44 sind auch die Lager für die Achse 41 angeordnet. Die Wandplatte 14 weist einen dem Querprofil 45 angepassten Ausschnitt 15 auf (siehe Figur 2B), damit das Querprofil 45 in der Anfangsposition der Schwenkplatte 40 einen maximalen Öffnungswinkel ermöglicht.

Die Schwenkbewegung der Schwenkplatte 40 wird durch einen Antrieb 50 bewirkt, welcher seitlich des Aufnahmeraums 30 an einer Halteplatte 17 befestigt ist. Die Halteplatte 17 ist auf dem Querprofil 11, dem Querbalken 12 und der Stützplatte 13 abgestützt. Mit dem Antrieb 50 ist über ein Schneckengetriebe 51 eine in Querrichtung verlaufende Drehachse 52 gekoppelt. Auf dieser sind beidseitig der Schwenkplatte 40 drehfest Rollen 53 angeordnet, an deren Achsen je ein Ende eines Riemens 54 befestigt ist. Die Riemen 54 sind von den Rollen 53 über nahe des vorderen oberen Endes der äussersten Bodenprofile 20 gelagerte Umlenkrollen 55 und nahe des unteren Endes der äussersten Streben 44 der Schwenkplatte 40 gelagerten weiteren Umlenkrollen 56 geführt und an ihren anderen Enden an den genannten Streben 44 befestigt. Die Befestigung der Riemenenden erfolgt durch längsverschiebbare Klemmeinrichtungen 57 bzw. 58. Als Riemen werden im dargestellten Beispiel handelsübliche Zahnriemen eingesetzt, es können aber auch z. B. Flach- oder Keilriemen bzw. Ketten verwendet werden.

Die Figur 2B ist eine schematische Darstellung der Vorrichtung mit teilweise hochgeschwenkter Rückwand. Um die die Rückwand bildende Schwenkplatte 40 hochzuschwenken, wird mittels des Antriebs 50 die Rolle 53 so gedreht, dass der Riemen 54 teilweise auf die Rolle 53 aufgewickelt wird. Durch die Verkürzung des Riemens 54 wird die an ihm befestigte Schwenkplatte 40 um die Achse 41 hochgeschwenkt, wobei das untere Ende der Schwenkplatte 40 dem durch die Bodenprofile 20 gebildeten Boden des Aufnahmeraums 30 folgt. Der den Drähten zur Verfügung stehende Aufnahmeraum 30 wird somit mit wachsendem Schwenkwinkel der Schwenkplatte 40 verkleinert.

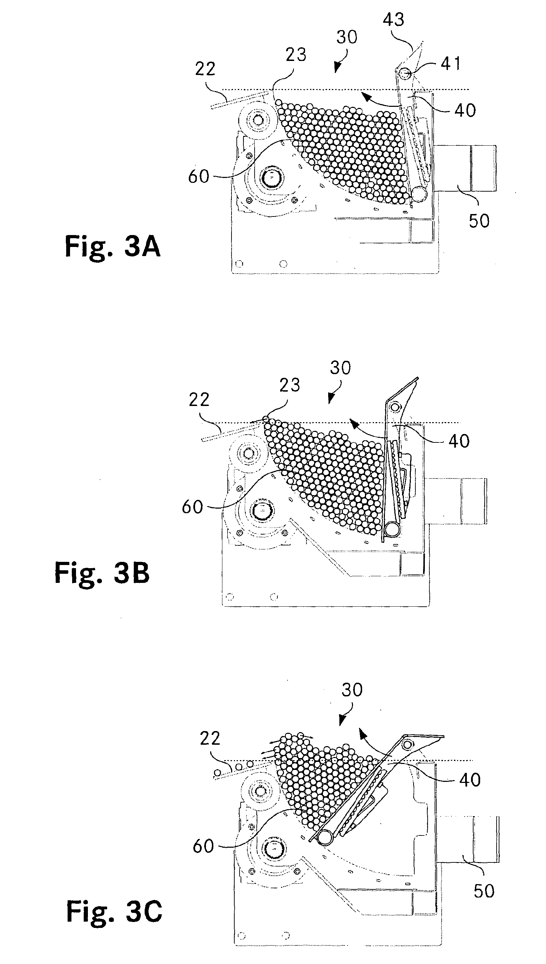

Die Figuren 3A-C sind schematische Darstellungen verschiedener Stadien des Verfahrens zum Aufteilen des Drahtbundes. Zum Einfüllen eines Drahtbundes 60 in den Aufnahmeraum 30 wird zunächst die Schwenkplatte 40 in ihre Anfangsposition gebracht, so dass der Aufnahmeraum 30 sein maximales Volumen annimmt (siehe Figur 3A, der Deutlichkeit halber ist der Riemen zum Schwenken der Schwenkplatte 40 hier nicht dargestellt). Die Schwenkplatte 40 bewegt sich aufgrund der Schwerkraft automatisch in diese Position, wenn der Riemen freigegeben wird. Der Drahtbund 60 kann nun von oben her in den Aufnahmeraum 30 eingefüllt werden, wobei der Einfüllvorgang durch den Einfüllabschnitt 43 der Schwenkplatte 40 unterstützt wird. In der Anfangsposition der Schwenkplatte 40 befindet sich der gesamte Drahtbund 60 innerhalb des Aufnahmeraums 30, unterhalb der oberen Kante 23 des Aufnahmeraums 30 bzw. der Ablageplatte 22.

Um nun einige Drähte des Drahtbundes 60 kontrolliert auf die Ablageplatte 22 zu transportieren, wird die Schwenkplatte 40 mittels des Antriebs 50 um die Achse 41 nach oben geschwenkt, bis ein oberer Teil des Drahtbundes 60 auf ein Niveau oberhalb der Kante 23 am oberen Ende der Ablageplatte 22 bzw. am oberen Ende der vorderen Begrenzung des Aufnahmeraums 30 zu liegen kommt (siehe Figur 3B). Einzelne Drähte in diesem oberen Teil gelangen nun aufgrund der Schwerkraft auf die Ablageplatte 22, während andere nach hinten in Richtung der Schwenkplatte 40 gleiten bzw. rollen. Die auf die in Zuführrichtung geneigte Ablageplatte 22 geförderten Drähte gelangen aufgrund der Schwerkraft weiter zur eigentlichen Vereinzelungsvorrichtung.

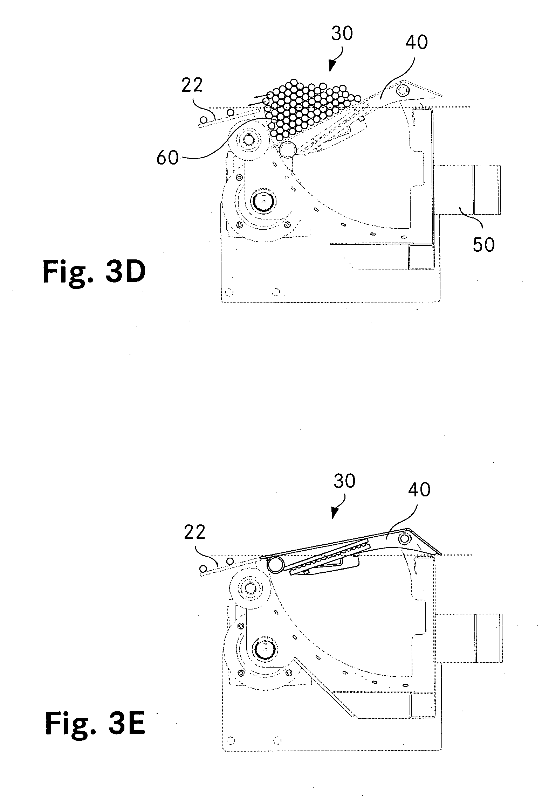

Das Verfahren wird nun fortgesetzt, indem die Schwenkplatte 40 in Abhängigkeit von der Grösse des im Aufnahmeraum 30 enthaltenen Drahtbundes 60 und des gewünschten Querdrahtflusses weiter nach oben geschwenkt wird (Figuren 3C, 3D). Zur Regelung des Verschwenkvorgangs kann ein Detektor vorgesehen sein, welcher die Anzahl Drähte auf der Ablageplatte 22 (oder weiter vorne, am Eingang der Vereinzelungsvorrichtung) erfasst. Abhängig von der erfassten Anzahl wird der Antrieb 50 gesteuert. Zusätzlich oder anstelle des genannten Detektors kann eine Messvorrichtung zum Erfassen der Grösse (bzw. des Gewichts) des Drahtbundes 60 (bzw. des aktuellen Füllstands des Aufnahmeraums 30) vorgesehen sein. Durch eine Erfassung der Gewichtsänderung lässt sich damit der aktuelle Drahtfluss ebenfalls bestimmen; ausserdem wird so auf einfache Weise ermöglicht, dass während des laufenden Verfahrens zusätzliche Drähte bundweise in den Aufnahmeraum 30 eingebracht werden. Andernfalls kann vor dem Einbringen die Schwenkplatte 40 in ihre Ausgangsstellung (vgl. Figur 3A) zurückgefahren und nach dem Einbringen wieder nach oben geschwenkt werden, bis erste Drähte auf die Ablageplatte 22 abgegeben werden. Während des Einfüllvorgangs kann die Verarbeitung der Drähte in nachfolgenden Bearbeitungsstationen fortgesetzt werden, wenn vor dem Zurückschwenken der Schwenkplatte 40 eine gewisse, zur Überbrückung des Einfüllvorgangs ausreichende Anzahl Drähte auf die Ablageplatte 22 gegeben werden.

Die Schwenkplatte 40 kann ausserdem im laufenden Prozess kurzzeitig etwas zurück- und wieder vorgeschwenkt werden, um eine bessere Ausrichtung und Verteilung der Drähte im Aufnahmeraum 30 zu erreichen. Dieser Vorgang kann periodisch ausgelöst werden oder abhängig von Messwerten, die vom Detektor bzw. von den Detektoren erfasst worden sind.

Die Figur 3E zeigt die Endstellung der Schwenkplatte 40, welche auch hier noch einen genügenden Winkel zur Horizontalen bildet, so dass sämtliche im Aufnahmeraum 30 ehemals enthaltenen Drähte entlang der Schwenkplatte 40 unmittelbar auf die Ablageplatte 22 gleiten bzw. rollen können. Der Aufnahmeraum 30 lässt sich also vollständig leeren.

Die Erfindung ist nicht auf das dargestellte Ausführungsbeispiel beschränkt. Beispielsweise kann die Geometrie des Aufnahmeraums, der Schwenkplatte und der Ablageplatte an die zu verarbeitenden Drahtbünde angepasst werden. Die Schwenkbewegung der Schwenkplatte kann auf andere Weise erfolgen, z. B. mittels einer oder mehrerer Spindeln oder Schubstangen oder durch Hydraulik- oder Pneumatikzylinder. Der Boden des Aufnahmeraums kann durch ein durchgehendes gebogenes Blech oder ein Gitter gebildet sein, oder anstelle der Schwenkplatte sind beabstandete Auflagerippen oder ein Gitter vorgesehen.

Anstelle einer schwenkbaren Rückwand können andere Teile der Begrenzung des Aufnahmeraums beweglich sein, so kann z. B. der Aufnahmeraum senkrecht zum Boden einen konstanten Querschnitt aufweisen und eine Bodenplatte innerhalb der Wände des Aufnahmeraums anheb- und absenkbar sein. Es ist auch möglich, die vordere Begrenzung des Aufnahmeraums zusammen mit der Ablageplatte abzusenken, so dass die den Aufnahmeraum und die Ablageplatte begrenzende Kante unterhalb eines oberen Teils des im Aufnahmeraum aufgenommenen Bundes zu liegen kommt.

Zusammenfassend ist festzustellen, dass durch die Erfindung eine Vorrichtung zum Aufteilen eines Bundes aus langen, dünnen Objekten geschaffen wird, welche einfach aufgebaut ist, zuverlässig funktioniert und eine feine Dosierbarkeit des Aufteilungsvorgangs ermöglicht.

## Patentansprüche

1. Vorrichtung (1) zum Aufteilen eines Bundes (60) aus langen, dünnen Objekten, insbesondere Drähten, umfassend
a) einen Aufnahmeraum (30) zur Aufnahme des Bundes (60);
b) einen Zuführbereich (22), welcher in eine im Wesentlichen quer zu einer Längsrichtung der Objekte orientierte Zuführrichtung geneigt ist,
**dadurch gekennzeichnet**,
c) dass der Zuführbereich (22) in Zuführungsrichtung an den Aufnahmeraum (30) angrenzt; und
d) dass die Vorrichtung Mittel (40, 50, 51, 52, 53, 54, 55, 56, 57, 58) umfasst zum Bewegen des im Aufnahmeraum (30) aufgenommenen Bundes (60) und des Zuführbereichs (22) relativ zueinander, derart dass ein oberer Teil des Bundes (60) auf einem Niveau oberhalb der oberen Begrenzung (23) des Zuführbereichs (22) zu liegen kommt und Objekte aus diesem oberen Teil des Bundes (60) im Wesentlichen durch die Schwerkraft in Zuführrichtung auf den Zuführbereich (22) gefördert werden, während ein unterer Teil des Bundes (60) durch eine Begrenzung (21) des Aufnahmeraums (30) im Aufnahmeraum (30) zurückgehalten wird.

2. Vorrichtung nach Anspruch 1, **dadurch gekennzeichnet, dass** eine obere Begrenzung (21) des Zuführbereichs (22) einen oberen Rand (21) des Aufnahmeraums (30) bildet.

3. Vorrichtung nach Anspruch 1 oder 2, **dadurch gekennzeichnet, dass** der Zuführbereich (22) ortsfest angeordnet und der Bund (60) bezüglich des Zuführbereichs (22) durch die genannten Mittel (40, 50, 51, 52, 53, 54, 55, 56, 57, 58) zum Bewegen in vertikaler Richtung bewegbar ist.

4. Vorrichtung nach einem der Ansprüche 1 bis 3, **dadurch gekennzeichnet, dass** die Mittel (40, 50, 51, 52, 53, 54, 55, 56, 57, 58) zum Bewegen durch einen bewegbaren Abschnitt (40) der Begrenzung des Aufnahmeraums (30) gebildet sind.

5. Vorrichtung nach Anspruch 4, **dadurch gekennzeichnet, dass** der bewegbare Abschnitt eine in Zuführrichtung hintere Wand (40) des Aufnahmeraums (30) ist, welche um eine an ihrem oberen Rand angeordnete horizontale Achse (41) schwenkbar ist, wobei eine an den Zuführbereich (22) angrenzende, in Zuführrichtung vordere Wand (21) des Aufnahmeraums (30) einen entsprechend kreisabschnittartigen Querschnitt aufweist.

6. Vorrichtung nach einem der Ansprüche 1 bis 5, **dadurch gekennzeichnet, dass** die Mittel (40, 50, 51, 52, 53, 54, 55, 56, 57, 58) zum Bewegen des im Aufnahmeraum (30) aufgenommenen Bundes (60) und des Zuführbereichs (22) relativ zueinander einen Stellantrieb (50) umfassen.

7. Vorrichtung nach einem der Ansprüche 1 bis 6, **gekennzeichnet durch** einen Sensor zum Detektieren einer Anzahl und/oder Position der auf dem Zuführbereich (22) befindlichen Objekte.

8. Vorrichtung zum Vereinzeln eines Bundes von langen, dünnen Objekten, insbesondere Drähten, mit einer Vorrichtung (1) zum Aufteilen des Bundes (60) nach einem der Ansprüche 1 bis 7, und mit einem dem Zuführbereich (22) nachgeordneten Führungsorgan mit einem Kontrollspalt, welcher eine einem Drahtdurchmesser entsprechende Spaltbreite hat und zur Aufnahme der vereinzelten Drähte in Form einer einlagigen Drahtschicht ausgebildet ist.

9. Verfahren zum Aufteilen eines Bundes (60) aus langen, dünnen Objekten, insbesondere Drähten, wobei der in einem Aufnahmeraum (30) aufgenommene Bund (60) und ein an den Aufnahmeraum (30) in eine im Wesentlichen quer zu einer Längsrichtung der Objekte orientierte Zuführrichtung angrenzender Zuführbereich (22) relativ zueinander derart bewegt werden, dass ein oberer Teil des Bundes (60) auf einem Niveau oberhalb einer oberen Begrenzung (23) des Zuführbereichs (22) zu liegen kommt und Objekte aus diesem oberen Teil des Bundes (60) im Wesentlichen durch die Schwerkraft in Zuführrichtung auf den Zuführbereich (22) gefördert werden, während ein unterer Teil des Bundes durch eine Begrenzung (21) des Aufnahmeraums (30) im Aufnahmeraum (30) zurückgehalten wird.

10. Verfahren nach Anspruch 9, wobei die Bewegung derart, insbesondere schrittweise, erfolgt, dass ein Objektfluss aus dem Bund (60) in den Zuführbereich (22) durch eine jeweilige vertikale Ausdehnung des oberen Teils des Bundes (60) kontrolliert wird.

11. Verfahren nach Anspruch 9 oder 10, wobei das Anheben des Bundes (60) durch Verkleinern eines Volumens des Aufnahmeraums (30) erfolgt.

12. Verfahren nach einem der Ansprüche 9 bis 11, wobei der Zuführbereich (22) unbeweglich ist und der Bund (60) angehoben wird.

13. Verfahren nach einem der Ansprüche 9 bis 12, wobei eine Anzahl und/oder Anordnung der auf dem Zuführbereich (22) befindlichen Objekte detektiert und die Bewegung des Bundes (60) und des Zuführbereichs (22) relativ zueinander abhängig von der detektierten Anzahl und/oder Anordnung erfolgt.

14. Verfahren nach Anspruch 13, wobei abhängig von der detektierten Anzahl und/oder Anordnung der Objekte eine Bewegung des im Aufnahmeraum (30) aufgenommenen Bundes (60) und des Zuführbereichs (22) relativ zueinander derart erfolgen kann, dass der Bund (60) relativ zum Zuführbereich (22) auf ein höheres oder auf ein niedrigeres Niveau bewegt wird.
